# EUROPEAN PATENT SPECIFICATION

(11) **EP 1 446 972 B1**
(45) Date of publication and mention of the grant of the patent: **27.05.2009**
(21) Application number: 02781527.3
(22) Date of filing: 15.11.2002
(51) Int. Cl.: H04W 4/02

(54) **PROVISION OF LOCATION INFORMATION**
BEREITSTELLUNG VON POSITIONSINFORMATIONEN
PROVISION D'INFORMATIONS DE LOCALISATION

(30) Priority: 22.11.2001 GB 0128027
(43) Date of publication of application: 18.08.2004
(73) Proprietor: Nokia Corporation, 02150 Espoo (FI)
(72) Inventor: MAANOJA, Markus, FIN-00370 Helsinki (FI); KOKKONEN, Petri, FIN-02230 Espoo (FI); DI-CHIARA, Bernardo, FIN-02700 Espoo (FI); HUOMO, Mikka, FIN-01610 Vantaa (FI); VARONEN, Tomi, FIN-00320 Helsinki (FI)
(74) Representative: Ruuskanen, Juha-Pekka
(86) International application number: PCT/IB2002/004787
(87) International publication number: WO 2003/045100

(56) References cited:
- EP-A- 0 700 226
- US-A- 6 104 931
- US-A1- 2001 027 111
- US-B1- 6 240 069

## Description

### Field of the Invention

The preset invention relates to provision of location information services in a communication system.

### Background of the Invention

In a cellular communications system mobile user equipment such as a mobile station is served by radio access entities referred to as cells, hence the name cellular system. Examples of cellular communication standards include the second generation (2G) GSM (Global System for Mobile communications) or various GSM based systems (such as 2G GPRS: General Packet Radio Service), the AMPS (American Mobile Phone System), the DAMPS (Digital AMPS). 3^{rd} generation (3G) cellular system systems have also been proposed, such as the 3G GPRS and communication systems based on the WCDMA (Wideband Code Division Multiple Access), for example the UMTS (Universal Mobile Telecommunications System); IMT 2000, i-Phone and so on.

In a cellular system, a base transceiver station (BTS) provides a wireless communication environment i.e. an access entity that serves mobile user equipment (UE) via an air interface within the coverage area of the cell. As the approximate size and the shape of the cell is known, it is possible to associate the cell to a geographical area. The size and shape of the cells may vary from cell to cell. One or several cells may also be grouped together to form a service area (SA). A base station may provide more than one cell. The 3^{rd} generation telecommunications standards may refer to the base station as node B. Regardless the standard, the term base station will be used in this document to encompass any such element of an access entity which transmits to and/or receives signals from a mobile user equipment or the like via an air interface.

Each of the access entities can be controlled by an appropriate controller apparatus. For example, in a WCDMA radio access network the base station is connected to and controlled by a radio network controller (RNC). In the GSM radio network the base station is typically connected to and controlled by a base station controller (BSC) of a base station subsystem (BSS). The BSC/RNC may be then connected to and controlled by a mobile switching center (MSC) or similar controller entity. Other controller nodes may also be provided, such as a serving GPRS support node (SGSN). The controllers of a cellular network are typically interconnected and there- may be one or more gateway nodes connecting the cellular network e.g. to a public switched telephone network (PSTN) and other telecommunication networks such as to the Internet and/or other packet switched networks.

The cellular network apparatus and/or the mobile station can be employed for provision of location information of the mobile station and thus the user thereof. More particularly, the cells or similar geographically limited service areas and associated controller nodes facilitate the cellular system to produce at least a rough location information estimate concerning the current geographical location of a particular mobile station.- If the location of the access entity is known, it is possible to conclude therefrom the geographical area in which the given mobile user equipment (communicating in said access entity) is likely to be at a given moment. More accurate location information may be obtained based on various location estimation methods, e.g. based range difference (RD) measurements, observed time difference of arrival (OTDOA), enhanced observed time difference of arrival (E-OTD), timing advance (TA), and round trip time (RTT) or by means of a global positioning system (GPS) or a differential GPS. The location information may be provided also when the mobile station is located within the coverage area of a visited or "foreign" network. The visited network may be capable of transmitting location information of the mobile station back to the home network, e.g. to support location services or for the purposes of call routing and charging.

A mobile user equipment may also be provided with appropriate equipment to generate information on which the positioning of the mobile user equipment can be based on. The mobile station may communicate the information via the base to an appropriate network element that may use the information in a predefined manner.

The geographical location of a mobile user equipment may be provided for client entities who wish to obtain such information. The clients may be internal or external to the communication system. The clients may use the information about provided by the location information services of the communication system for various purposes. The use may be commercial such as advertising, looking for services in a particular area and so on. The use may also be private, such as a 'find a friend service'.

The location service functionality may be provided by a separate network element such as a location information server which acts as a gateway between the communication network and a client who has requested for the location information. The location information server responds to the request by the client based on information received from one or more of the location determination entities of the communication system, said information regarding the determined location of a target user equipment

It might be useful for various commercial and non-commercial entities to be able to have information concerning mobile user equipment that are located within a particular geographical area. In some application it might be useful for obtaining location information only in selected parts of the communication system. There are also application where it might be useful to be able to locate selected mobile user equipment or subscribers in a defined area. For example, various organisations or even individuals may want to send information and/or offer services to mobile stations only in a particular defined geographic area and/or to certain type of subscribers in that particular geographical area. The mobile stations in a certain area and/or certain types of subscribers may also need to be tracked e.g. for fleet management or loyalty card scheme purposes.

Push type services and especially push advertising have been proposed. Basically the purpose of the push type services is to offer value added services and information to segmented user groups. An example is a supermarket in a certain location that would like to send advertisements for all loyalty card holders e.g. by means or the short message service (SMS). However, this kind of broad segmentation may result to a large number of target subscribers, and may be held to be too expensive to perform. For example, most of the loyalty card holders may be far away from the location of the supermarket and therefore unable to use the advertised offer.

The push type advertising mechanism could be enhanced so that is based, in addition to the target segmentation (profiling), also on the geographical locations of the members of the target group. To be able to support this kind of selection of the "targets" the communication network should provide location information regarding each member of the target group. Since the group may be substantival large, this may mean that a substantial number of location request needs to be processed by the location information function of the communication system.

US 6240069 discloses a telecommunications system and method for defining location-based group services, which can be implemented within a Group Call Services (GCS) node associated with a cellular network. When a group call is initiated, the GCS can send a positioning request to a Mobile Location Center (MLC) to locate the group members within a specified area. The particular location can be defined by the group number or the location can be prompted by the GCS.

US 6104931 discloses a telecommunications system and method for defining location services in a simplified manner based upon whether the positioning request is an interactive request or a batch mode request. In order to initiate a positioning request, a Location Application (LA) must first register with at least one Mobile Location Center (MLC), define the service parameters specific for that LA and receive a Location Application Identifier Number (LAIN). Thereafter the LA can send either an interactive or batch mode positioning request along with the LAIN.

US 2001/027111 discloses a group communication system including a plurality of mobile terminals with member-attribute information, and a center component for collecting location information of the mobile terminals.

The inventors have found that the present location information provision mechanisms might not be capable of locating/tracking a substantially large number of users.

The prior art solutions are designed to calculate as accurately as possible the position in response to a single location request concerning a single target user equipment. This is required because of the QoS (quality of service) requirements. In the prior art the location reporting must be done based on stand-alone requests or periodically by asking the information from the location information service entity such as the GMLC. In practise this leads to relatively heavy signalling and calculation load to the communication network if a substantial number of users is to be located for a task such as for the purpose of sending localised advertisements.

### Summary of the Invention

It is an aim of the embodiments of the present invention to address one or several of the shortcomings of the prior art services.

According to one aspect of the present invention, there is provided a communication system for provision of communication services for mobile user equipment comprising:
a plurality of access entities for enabling the mobile user equipment to access the communication system;
a location information service entity for provision of location information regarding the geographical location of at least one mobile user equipment;
at least one controller arranged to provide the location information service entity with information regarding changes in the accessentities involved in the provision of the service provided for the at least one mobile user equipment by the communication system, the location information service entity being arranged to provide location information based on said information regarding the changes.

According to another aspect of the present invention, there is provided a location information service entity for a communication system, comprising:
an input for receiving from the elements of the communication system information regarding an access entity of the communication system that is serving a mobile user equipment;
a processor for processing the information;
a database for storing spatial information wherein the access entities are associated with geographical locations;
an output for provision of location information to a client based on said information regarding the access entity serving the mobile user equipment information stored in the database.

According to another aspect of the present invention, there is provided a method of providing location information for a client regarding mobile user equipment served by a communication system, said communication system providing communication services for the mobile user equipment by means of a plurality of access entities, the method comprising:
activation a monitoring function in a controller of the communication system for detection of an event in association with the access entities involved in the provision of communication services for at least one mobile user equipment;
in response to detection of the event, reporting the event to a location information service entity arranged for provision of location information regarding the geographical location of said at least one mobile user equipment; and
based on said information regarding the event, generating a message for reporting to the client the location of said at least one user equipment.

In a more specific embodiment the at least one controller is arranged to push information about a defined change in the service to the location information service entity in response to detection of the defined change. Said change in the service i.e. the event may comprise movement of the mobile user equipment from an access entity to another access entity.

Said at least one controller may be arranged to provide the location information service entity with a unique identifier of an access entity as an indication of a change in the location of the mobile user equipment.

The location information service entity may define geographical location coordinates of the mobile user equipment based on said information from the at least one controller. The location information service entity may comprise a spatial database for storing information for use in association of access entity identifiers with geographical location areas.

The location information service entity may be arranged to respond a location information request by a client based on said information from said at least one controller. The request from the client may concern a substantially large group of users of mobile user equipment.

The location information service entity may be arranged to provide information regarding the operational state of the user equipment and/or data volumes communicated to and/or from the user equipment.

A plurality of access entities may be grouped into a larger location area group, the arrangement being such that location information is provided only if the user equipment moves into or out from the location area group.

The responsibility to provide the location information service entity with information regarding events in association with the communication services may be relocated to another controller.

The embodiments of the invention may provide a substantially lightweight and quick method for provision of location information may be provided. Location information regarding user equipment may be provided without excessively loading the resources of a communication network. The information may be provided only regarding mobile users who are located within or close to a defined area. The reporting may be triggered by actions of the users. Location procedures may be triggered regarding a substantially large group of target mobile users. The target users and a target area and other information may be given in a single location information request. The embodiments may allow a reliable location of a plurality of subscribers in a triggered fashion.

### Brief Description of Drawings

For better understanding of the present invention, reference will now be made by way of example to the accompanying drawings in which:
Figure 1 shows some entities of a cellular communication system that may be used for implementing an embodiment of the present invention;
Figure 2 shows a defined area covered by cells; -
Figure 3 shows schematically the signalling in accordance with an embodiment;
Figure 4 is a signalling flowchart illustrating the operation of one embodiment of the present invention;
Figure 5 shows a further embodiment; and
Figure 6 is a flowchart for operation in accordance with an embodiment.

### Description of Preferred Embodiments of the Invention

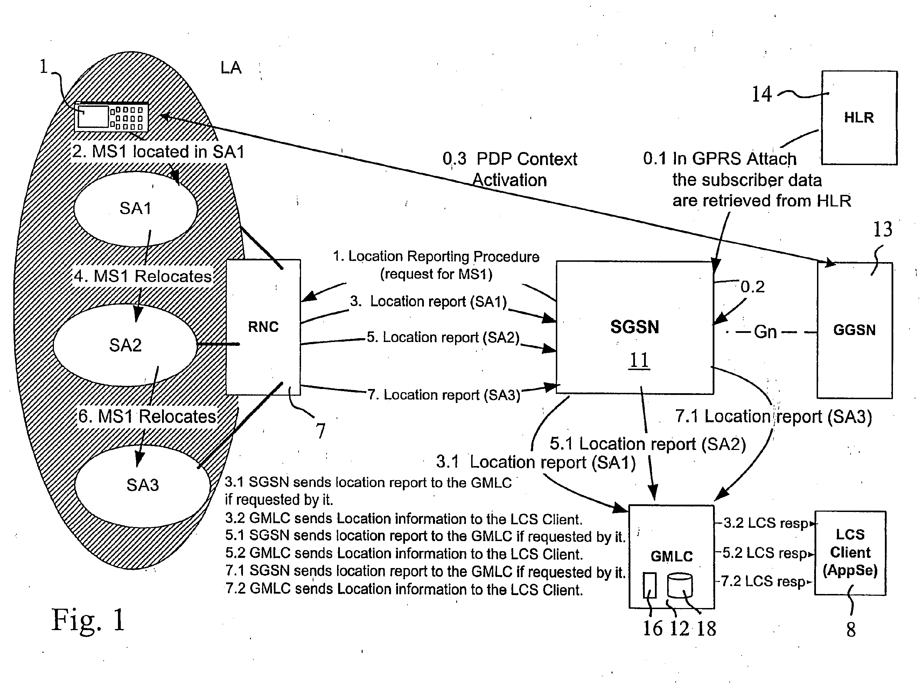

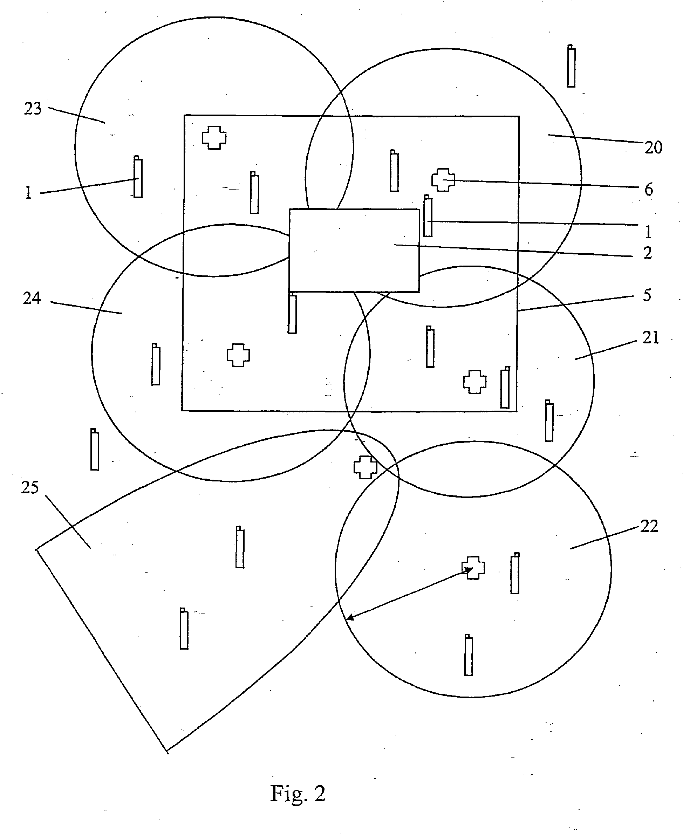

Reference is made first to Figures 1 to 3. Figure 1 shows a part of a cellular public land mobile network (PLMN) in which the embodiments of the present invention may be employed. Figure 2 shows schematically an area covered by a plurality of access entities 20 to 25, i.e. cells of a cellular communication system.

Each cell has associated therewith a base station 6. A mobile user equipment i.e. mobile station 1 is able to communicate with the base stations of the cells via an air interface. Since the base station are typically fixedly positioned, or moved only occasionally, the geographical location of each base station is known by the system. The location of a base station may defined, for example, in X and Y coordinates or in latitudes and longitudes. It is also possible to define the location of the mobile station in vertical directions. For example, Z co-ordinate may be used when providing the location information.

It shall be appreciated that the size and shape of the cells or other access entities is typically not as regular as what is shown in Figure 2, but will depend on the conditions in the area and the communication application. It shall also be appreciated that the base stations may provide differently shaped radio coverage, such as an omni-directional coverage area or a sector beam provided with a directional or sector antenna. The sector base station may use e.g. three 120° directional antennae whereby three radio coverage areas are provided, or four 90° directional antennas providing four radio coverage areas and so on, or any combinations of different radio coverage beam widths

The mobile user equipment 1 are able to move within an access entity and also from one access entity to another access entity. The location of a mobile user equipment may thus vary in time as the mobile user equipment is free to move within the service area of the communication system.

Some of the elements of a 3G communication system such as the UMTS (Universal Mobile Telecommunication System) will now be discussed in more detail before explaining the basic concept of the present invention. Each of the base stations 6 is controlled by a respective radio network controller RNC 7 of a radio access network 4. It shall be appreciated that any other similar entity, such as the base station controller (BSC) may be used for the similar purpose. The radio network controller RNC and the base station(s) may sometimes be referred to as the radio network subsystem RNS or the base station subsystem (BSS), depending on the application. It should be appreciated that a telecommunication network is typically provided with a plurality of radio access networks and/or RNCs, BSCs and so on, and that each access network controller is arranged generally to control a plurality of base stations.

The radio network subsystem (or BSS) may be connected to a controller node 11 such as a SGSN (serving GPRS support node) or a MSC (mobile switching centre). The SGSN provides various control functions such as keeps track of the mobile station's location for the purposes of packet data transfer, performs security functions and access control. The SGSN may be connected to further nodes such as a gateway GPRS support node (GGSN) 13.

The network may also include nodes for storing information of user equipment and/or subscribers subscribing the communication network or visiting the network, such as an appropriate home location register (HLR) 14 and a visitor location register (VLR, not shown). Depending the implementation, the location register nodes may be integrated with a control node. The HLR 14 may also store subscriber information. The subscriber information may be transferred to the SGSN 11 or any other entity authorised to receive the information. This information may include, for example, information that relates to the privacy and/or authentication checks. The privacy information may indicate whether the subscriber is willing allow information about his/hers location to be given to a particular third party or to any other party.

Figure 1 also shows a location information service provision entity 12 for provision of location information for client applications 8. In general terms, a location information provision entity can be defined as a functionality or entity capable of providing a location service client (LCS client) 8 with information concerning the geographical location of the mobile user equipment 1. In Figure 1 the location information service entity 12 is shown to comprise a location service gateway node in the core network side of the 3G communications system. In a more specific form of the embodiment described below the gateway entity is provided by a gateway mobile location center (GMLC).

The client 8 is a logical functional entity that may make requests to the GMLC node 12 for information about the location of one or more of the mobile stations. The LCS client 8 may be an entity that is external to the PLMN. The client may also be an internal client (ILCS) i.e. reside in any entity (including a mobile station) within the PLMN. The client is entitled to receive at least some degree of information concerning the location (or location history) of the mobile user equipment 1.

The particular requirements and characteristics of a location client 8 may be known to the location information server 12 by its location client subscription profile. The particular client related restrictions may also be detailed in the subscription profile of the client. The location information server 12 may also enable a network operator to charge the client 8 for the location features that the network operator provides.

In a typical arrangement an external LCS client who wants to receive information regarding the location of the user equipment needs to register to a specific GMLC. A reason for this is that typically only a particular GMLC is allowed to provide information regarding the locations of subscribers to a particular external client. This is so e.g. for security, charging and privacy reasons.

It should be appreciated that a communication system may comprise more than one location service provision entity, such as a plurality of location information servers. Each of the location information servers may have an individual address or other identifier so that the other elements of the system may communicate thereto.

The location information service entity 12 is arranged to receive predefined information concerning the location of the mobile user equipment 1 from the radio access network via a MSC and/or SGSN 11 connected by the appropriate interface means to the access network. The location server 12 may be arranged to process information received from the core network side and/or some other predefined parameters and/or to perform by processor means appropriate computations for determining and outputting information regarding the geographical location of the mobile user equipment 1.

As shown by the arrows, the location service entity 12 obtains positioning information from the communication network. This information may be processed by the location information service entity 12 in a predefined manner before provision of the location of the user equipment to the client 8.

In conventional operation, the location server 12 may be arranged to request for the location information from the access network. Instead of this, in the below described preferred embodiment information is pushed from the network side to the location information services server 12. The pushing of information may be triggered by an event such as a change in the access entity serving the mobile user equipment. The triggering of the automatic information provision to the location information service entity 12 from the network will be described in more detail later.

It should be appreciated that the elements of the location service functionality may be implemented anywhere in the communications system. The location information service provision functions may be distributed between several elements of the system.

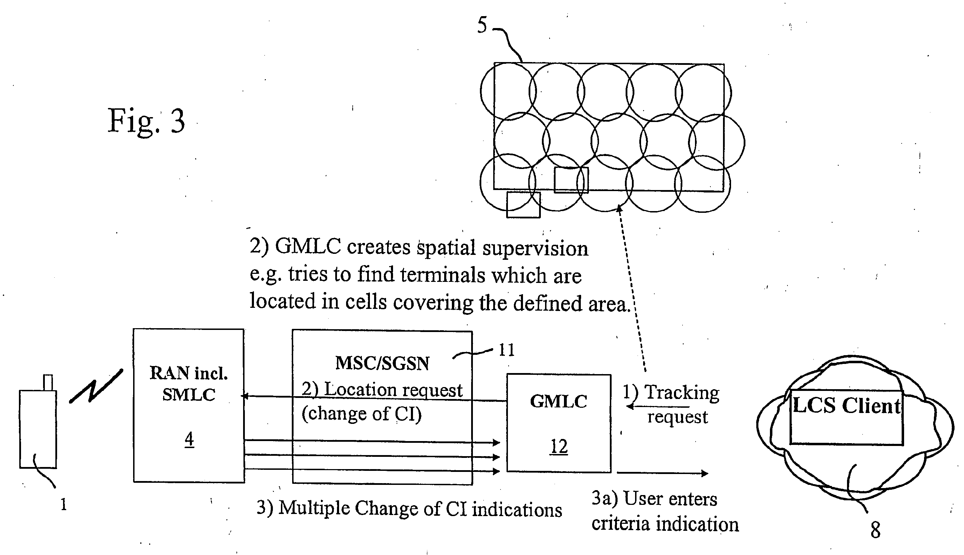

The following describes a mechanism which can be used to track a substantially large number of mobile user equipment based on a request from the LCS client 8. Figure 1 shows how the subscriber 1 moves i.e. relocates from a service area SA1 to another service SA2 and further to a third service area SA3 and the subsequent signalling procedures. The mechanism may be used, for example, when the client application 8 wants to know when an individual user 1 out of very large group of users is entering or leaving a particular geographical area, such as an area 5 in Figures 2 and 3.

The inventors have found that e.g. for the push type services it may not always be necessary to know the exact location of a subscriber. Instead, it may be enough if it can be determined if he/she is within or outside a certain area. Thus the preferred embodiment provides the location information on a cell level accuracy based e.g. on the cell ID (e.g. in the 2G system) or service area accuracy level based on the service area identity (e.g. in the 3G systems).

The service area identity (SAI) is a 3G term meaning a set of cells. The number of cells can be anything. The number of cells covered by SAI may be as small as one, i.e. the SAI may equal CI. A SAI may also be as large as a Location Area (LA; see Figure 1) comprising a plurality of service areas.

The location reports to the GMLC 12 related to a subscriber who changes from a service area or cell identity (SA/Cell ID) to another may be triggered by detection of such a change.

The following describes an example how the communication network elements may inform a location service provision entity 12 of changes in the Cell / Service Area of a subscriber, i.e. the user of the mobile user equipment 1. The location service provision entity 12 may be provided with appropriate software code and processor means for implementing the functions. Such a 'location tracking intelligence' is referred to in the following as a location service middleware 16. The location service middleware 16 facilitates calculation of a larger number of position estimates. As shown by Figure 1, the location service middleware entity may be provided in association with a GMLC, but this is not always necessary.

The subscriber moves are preferably monitored based on Cell change information. Instead of providing the x,y location coordinates of the user equipment the communication network provides the current Cell ID or service area identifier to the GMLC. The middleware 16 may then compare the Cell ID information to a spatial database 18 to find out whether the user equipment and thus the user is close to or within a desired area 5.

A selected group of subscribers or all subscribers may be determined to be located within the defined geographical area 5. Although Figure 2 shows (for clarity reasons) that the requested area as a rectangular window 5, the defined area may have any appropriate shape such as ellipsoidal, polygonal or circular shape. The area may also be defined e.g. as an area within a defined radius or distance from a certain point (e.g. base station location or any other location), name of an area (e.g. name of a town, village or an organisation within a predefined area), by coordinates or latitudes and longitudes and so on. The area definition may also comprise an altitude parameter. The definition of the defined area may also comprise a uncertainty parameter. For example, an ellipsoid area may be defined with an uncertainty circle and so on.

The client 8 may initiate the procedure by sending a request to the GMLC 12 and thus the location middleware 16. In the following example the client application 8 is assumed to be associated with a supermarket 2 of Figure 2. The defined area 5 is shown to include the supermarket 2 as well as a certain area surrounding the supermarket.

The request may define the area 5, for example, by means of location coordinates or a pre-defined area ID. The request may ask the GMLC 12 to tell when a member (or a plurality of members) of a specific group is entering the defined area. Parameters of the request may include the user group identifications such as subscriber numbers or any other pre-defined identifications of the members of that group. The location middleware 16 may then accomplish screening functions, save the geographical area definition and initiate a location request for all user equipment defined to belong to the user group.

Instead of coordinates, the location of the user equipment is determined by the location middleware based on "Change of Cell" information. For example, the GMLC 12 may send a request for receiving information from the network about changes of the CI/SAI of any of the users instead of asking for coordinate information regarding a specific user.

Appropriate network entities may then start a "Cell change" supervision procedure. The supervision can be handled in any appropriate element of network, for example by the access network controller 7 (RNC or a BSC), the SGSN or a MSC. Any defined changes that associate with the tracked subscribers are reported to the GMLC. The GMLC may then compare the reported cells to the geographical area definition which was received from the client. The GMLC is preferably made aware of the cell coverage information. For example, the GMLC may have an access to network planning information or similar information source.

If any of the user equipment 1 is within or very close to the defined area 5 indication of this is then sent to the client 8 from the GLMC 12. Alternatively, a more advanced/accurate location services (LCS) procedure comprising location measurements and other location determinations may be initiated. If each user equipment of the group is outside of the desired area 5 then no indication may be given to the client application, or some other procedure, such as extension of the defined area may follow.

Since the spatial supervision is done in the GMLC location middleware the operation does not require substantial amount of extra actions to be taken by the communication network. That is, none of the location information provision entities of the telecommunication network needs to perform any calculations, measurements or other location determination procedures that would normally be used when responding to a location information request concerning a single target user equipment.

The CI/SAI information can be pushed to the GMLC location middleware 13 via appropriate interfaces between the radio network 4 entities 7 and core network entities 11 and the core network entities 11 and the GMLC 12. These functionalities may be provided, form example, by the already, at least partially, existing 3GPP interfaces, and are thus not described in detail herein. It is sufficient to note that that for example a 3GPP lu interface procedure referred to as "Location reporting control" can be used for transporting the Service Area change indications from radio network to the core network entities. This is applicable e.g. to the subscribers which are in the MM CONNECTED state. The MM CONNECTED state means that the Mobility Management State of the subscriber is "3G CONNECTED/ 2G READY". For example, the subscriber may have a PDP Context and he/she is transferring data. Other possible states are "3G IDLE/ 2G STANDBY" (no data transmission) and "3G DETACHED/ 2G IDLE" (not attached to the GPRS network).

The reporting procedure can feasibly be used for "always on" GPRS connections. On the other hand, a 3G-MSC may initiate the "Location reporting procedure" for all established calls. In both of these situations the core network has capability to interrogate the CI/SAI changes from the RNC without any new signalling resources. In 2G systems there is no need to interrogate Cell ID parameters from the BSC because the 2G SGSN is aware of the Cell ID for subscribers in the MM READY state. Similarly the 2G MSC is aware of the CI for all active calls.

A mobile application part (MAP) Location request message (e.g. "Provide Subscriber Location") may be adapted to include a request for information about any CI/SAI changes. Similarly the MAP Location response message (the so called PSL response Provider Subscriber Location) may be used to transport the CI/SAI. This may be done in addition or as an alternative to the current x,y coordinate type reporting capability.

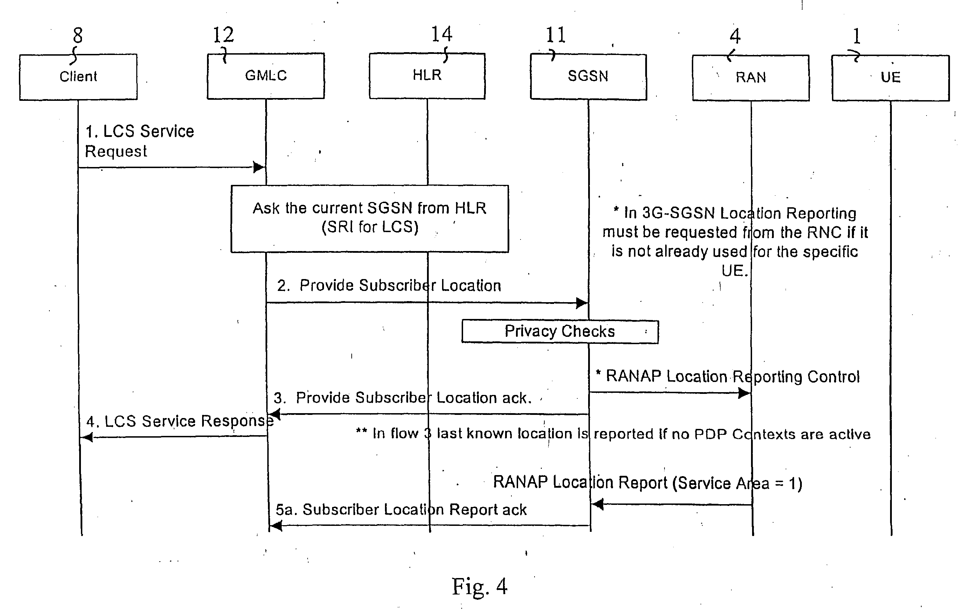

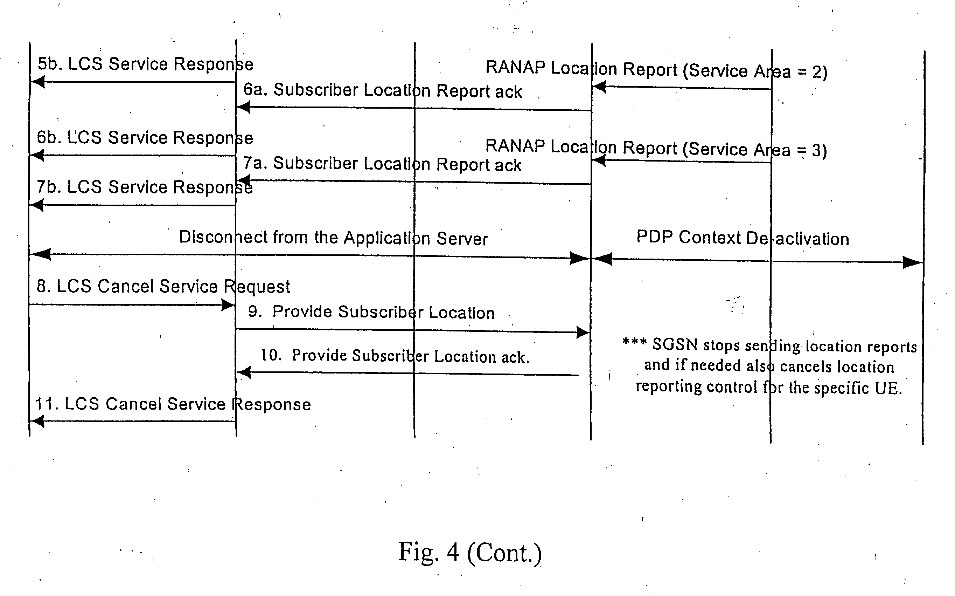

The signalling flow chart of Figure 4 shows signalling in operation in accordance with an embodiment.

The client 8 may request location information from the GMLC 12. The client may request provision of location information about specific subscribers in a manner that is triggered by a specific event, and more particularly, by a change in the access entity of the subscriber. Thus the client 8 may indicate in the request that it wants to receive location information if the SA/Cell ID of the subscriber changes.

The client 8 may also request other information that associates with the subscriber such as information regarding subscriber Mobility Management (MM) state. The PMM State may be of relevance e.g. when the Client 8 needs exact and reliable information about the subscriber location. The term PMM state should be interpreted generically as being relevant to 2G and 3G standards. This information can be used to ensure the subscriber is in CONNECTED (3G) / READY (2G) state. Although the location may also be determined for subscribers in the IDLE (3G) / STANDBY (2G) states, this information is not as exact since only routing area updates (RAUs) may be received by the SGSN instead of location reports.

If a subscriber is in the IDLE/STANDBY state, the Client 8 may activate a PDP Context (or send some data using already existing context if available) towards the specific subscriber if the client wants to change the state of the subscriber from the IDLE / STANDBY state to e.g. the CONNECTED / READY state. The LCS Client could also page the subscriber. The client may also, for example, send some important information about the service or send advertisements to the subscriber in order to get the MM State back to the CONNECTED/READY state.

The client 8 may also request information such as send/received data volumes of PDP Contexts of a specific subscriber. The subscriber data volume reporting in service area accuracy level may be beneficial for example in intelligent network (IN) Prepaid services or the like. The GMLC may provide the information e.g. to a service control point (SCP) of the IN. If location information is provided to the SCP by the GMLC, the GMLC may also provide the information of the data volumes for specific PDP Contexts. The SCP may be an internal client that enabled to request for subscriber location in a triggered manner together with information regarding the data volumes e.g. via a SGSN-SCP CAP (CAMEL application part) interface.

The client may also indicate in the request required accuracy, e.g. by indicating if cell area, service area or location area accuracy is required.

The GMLC 12 may forward the request to an appropriate serving GPRS support node (SGSN) 11. The correct SGSN address is typically provided by the HLR 14. When the GMLC 12 forwards the Location Request to the SGSN 11 it also indicates that it also wants to receive an indication if the SA/Cell ID of the subscriber changes. Indication regarding changes in the MM State or information regarding the uplink/downlink data volumes may also be requested if this was requested by the client 8.

Messages 1 and 2 may also contain some additional parameters. If messages 1 and 2 are generated based on existing protocols, a new fields may be required in order to allow the provision of the tracking function.

The SGSN may initiate a privacy check according to the subscriber's privacy information also provided by the HLR. If the privacy check was successful, the SGSN may return the subscriber's SA/Cell ID (or other location information + PMM State) to the GMLC.

As shown in Figures 1 and 3, the location information can be received from the radio network e.g. from the RNC 7. The reporting may be based e.g. on the RANAP (Radio Access Network Application Part) 'Location Reporting' procedure. This may be done e.g. when the subscriber has an active PDP Context. This is illustrated in Figure 1 by the location reports 3, 5 and 7 concerning changes with regard to the service areas SA1 to SA3, respectively.

Other reporting procedures may also be used. It shall also be appreciated that the location information may be provided by the GMLC/SGSN or RAN in some other form than the cell ID or SAI discussed above.

Since the service area (SA) information is always stored at the SGSN, the information that may be used for the provision of location information for clients is always available. This is contrary to the conventional LCS arrangements wherein the location data is not stored e.g. at the GMLC.

If the SGSN 11 notices that the SA/Cell ID of the subscriber has changed, the location service information provision routines thereof are invoked and the new SA/Cell ID of the subscriber 1 is then reported to the GMLC 12. This may be done e.g. by means of a MAP (Mobile Application Part) 'Subscriber Location Report' message.

Although not necessary in all applications, and therefore not shown in Figure 4, the mobile user equipment 1 may initiate attachment and/or authentication procedures with the SGSN before any location request are sent. After the attachment the subscriber may create a PDP context to the client 8. After the connection is successfully created the subscriber may then activate the specific location service. For example, the client 8 may provide a service which requires that the subscriber 1 makes a connection to the service where after the client may ask for location of the subscriber in a triggered fashion. The attachment is not needed e.g. if the service is a loyalty card service or similar, because the GMLC 12 is allowed to report all subscribers of the target group to the client 8.

Both the subscriber and the client may initiate the location tracking procedure. An example of subscriber initiated services is wherein the subscriber enters a shopping mall and is willing to receive special offers from a server advertised by the shopping mall. Another example is a "alarm me when I am entering the desired area" type service. This may be used e.g. while the subscriber is in a bus and wants an indication when to step out from the bus.

The SGSN 11 will preferably report every SA/Cell ID change. However, this is not always necessary. For example, if a especially high accuracy is not required or if the signalling channels are heavily loaded, the SGSN may report only every second or third change.

The operator or service provider may also define larger areas comprising a plurality of small service areas (SAs). For example, one Location Area/Routing Area may consist of more than 100 service areas. It may be defined that service areas SA1 to SA30 associate with a cheaper area (e.g. home/office zone). If a subscriber is located to one of the service areas SA1 to SA30, it is then "inside" and has the cheaper rate. If the subscriber is located in the SA31 to SA100, it is determined as being "outside" and has a more expensive rate. The service may only be interested to know when the subscriber moves from the "inside" to the "outside" area or vice versa. So the service area changes between the services areas SA1 to SA30 are not relevant. The only changes that matter are changes between the service areas SA31 to SA100.

The relevant service area definition may be set/controlled by various entities. For example, in the above example the area concept may be distributed over the location middleware (geographical mapping & area definition) and the SGSN (grouping of the service areas to larger groups).

The GMLC 12 may define the accuracy that is required in the information provision. The required accuracy may be indicated e.g. by so called quality of service (QoS) parameters included in a location information request.

The GMLC 12 receives Location Reports from the SGSN 11. The GMLC 12 may then forward the information to the Client 8 in a 'LCS Service Response' message. Depending on the application the GMLC may or may not process the information before responding. If processing is done, the GMLC may, for example, indicate the location as geographical coordinates it has computed based on the access entity identity information received from the SGSN or use the spatial database, as described above.

The client may be provided with the subscriber location in accuracy of Service Area (or Cell ID). Location can be provided for the client in a reliable real time fashion. The client may be provided with an access to the network architecture information or some specific cell areas may be made known to the client so that the client may understand the coordinates of each cell. For security reasons, the access to the cell coordinates and/or network architecture information may be limited to the internal clients.

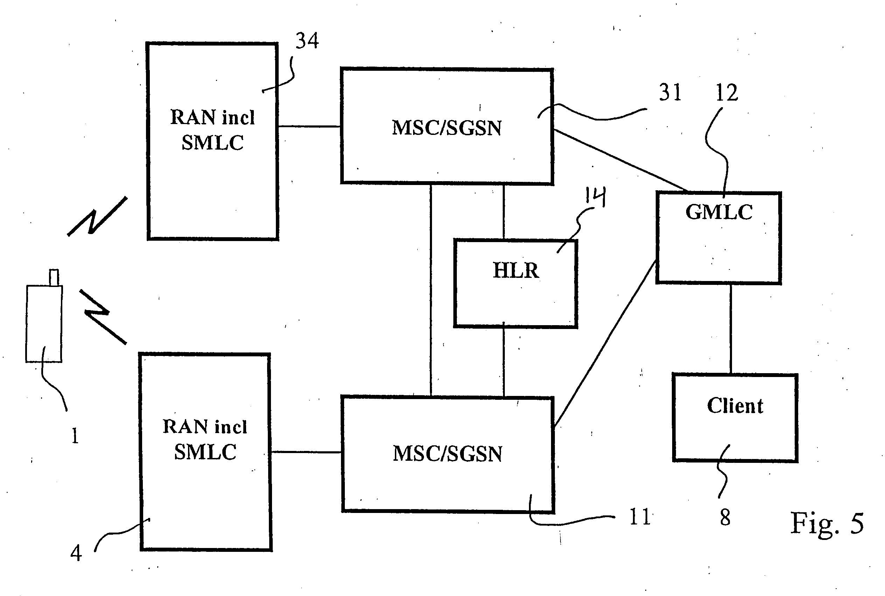

The following will describe with reference to Figure 5 operation in a situation where the Service Area/Cell ID of a subscriber changes and that new SA/Cell ID is resided under a new SGSN 31. If the tracking function is active, transfer of Location Service information to the new SGSN 31 needs to be triggered. There are alternative ways to implement this.

In the first alternative the old SGSN 11 sends that triggered Location Service information directly to the new SGSN 31. When the new SGSN 31 sends the P-TMSI (Packet temporary mobile subscriber identity) to the old SGSN 11, the old SGSN returns also the triggered Location Service information to the new SGNS in addition to the IMSI (International mobile subscriber identity) and authentication information. This may require modifications to the GTP procedure. The GTP is a GPRS Tunneling Protocol. The GTP is used when information is exchanged between xGSNs.

In a second alternative the triggered Location Service information is stored in the HLR 14. When the procedure to relocate the SGSN functions to the new SGSN 31 is completed the information is send from the HLR to the new SGSN 31. This alternative requires new fields to the MAP 'Send Routing Information' message so that the LCS message may indicate where the triggered Location Service information shall be send. There may also be need for modification of the MAP interface between the HLR and new SGSN so that the triggered Location Service information can be transferred.

A third alternative employs a mechanism that is similar to the one known as the deferred MT-LR (Mobile Terminated - Location Request) procedure. If the SGSN/MSC 11 receives an indication that the user equipment 1 has moved to another, new SGSN/MSC while it is waiting for the requested event to happen, a 'Subscriber Location Report' may be sent directly to the GMLC 12 with the information that the MT-LR must be re-initiated with the new SGSN/MSC 31. The address of the new SGSN/MSC 31 may be included in the Subscriber Location Report, if it is available.

The location information provision procedure may be "phased" such that a substantially large number of users can be initially tracked with low accuracy. This causes only a substantially low load to the network. More advanced methods can then be used to get more detailed location of selected users should this be needed. Thus, in addition to initial step of finding those users who are near to a specific area, a next step could be is to shrink this group and find more accurately the users which are very near or even inside e.g. a shop.

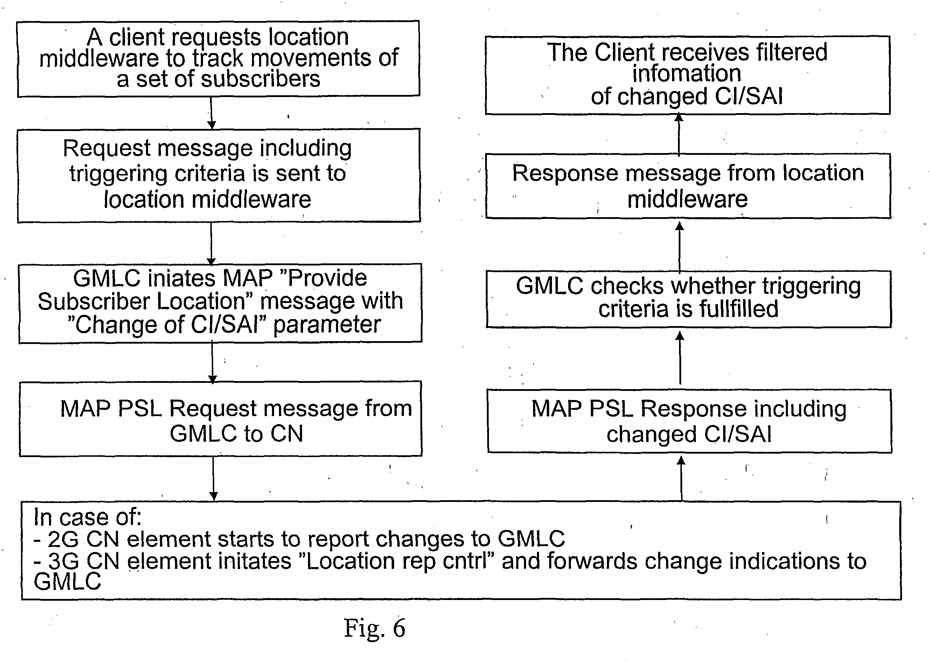

Figure 6 shows a flow chart for an embodiment wherein a client application requests the location middleware to indicate certain movements of the user. For example, the information delivery may be triggered whenever a subscriber leaves and/or enters a geographical area. Triggering may also occur if a user leaves and/or enters a set of cell IDs. This could be used e.g. by network performance optimisation or Home Zone charging functions.

Depending of the requested QoS (accuracy, time of interval, type of service and so on) the location middleware may decide to initiate the procedure for monitoring for changes in the CI/SAI. If so, the location middleware (i.e. the GMLC) may send a MAP 'Provide Subscriber Location' message with 'Report change of CI/SAI' indication to the core network. It should be noted that GMLC may identify the correct CN element by using "Send Routing Info for LCS" procedure with the HLR, as the HLR knows to which CN element the subscriber is attached to. When receiving the request the CN element acts as described above and reports any CI/SAI changes to GMLC. When receiving the CI/SAI change indications from the CN the location middleware analyses whether the triggering criteria is met. For example, the location middleware may determine whether the new CI/SAI of the subscriber is in the defined geographical area e.g. by comparing the cell coverage area to the defined triggering area. A determination may also be done whether the new CI/SAI of the subscriber is identified by the cell ID set referred to above.

If the triggering criteria is met the change indication (e.g. enter/leave) is given to the client application.

The operator may use the location information by the GMLC for various purposes. The information may be saved for history database (e.g. for network management functions such as monitoring, optimisation and so on). Additionally this procedure can be used to optimise the number of high quality (accuracy) location requests to be sent to the network, e.g. in order to locate only those subscribers who are close to the monitored area.

If an external client is used by other subscriber than the subscriber to be located or another client application, there are alternative possibilities to charge for the use of the service. The service requesting for the information may be charged by the GMLC or by an internal application server (AS) or the client. The service may be charged by the GMLC e.g. if the external client is requesting the location. The specific AS may also charge based on its normal charging procedures. The GPRS access may be charged normally. The operator may have different charging schemes based on service provider and for example based on the content. The operator charging facility may be provided by the GMLC.

The SGSN and the GGSN may charge the transferred data volume. Everything else is preferably charged by the GMLC and/or the service provider.

The service provider (Internal/External AS) may act as a Client. The Client has to be authenticated by the location information service Server (GMLC).

According to a further embodiment the user equipment itself provides information about its location, e.g. determined based on the GPS, and any changes in the location directly to the GMLC or to the Client. However, in this case the Operator may not be able to charge the Client for using the location service because it may not know about the use of service. The mobile user equipment 1 may be provided with an appropriate terminal equipment for the provision of location information, such as a GPS receiver and/or a location determination processor unit.

In addition to the push type advertisements, the invention may be employed in association with any value added service wherein location information is utilised.

In addition to tracking of a large group of subscribers, the same procedure may also be used for other purposes. For example, the reporting may be used to support event based services. The spatial database may store profiles e.g. for shops and buildings as well as for mobile and fixed subscribers. Subscriber may also provide the spatial database with an indication that he wants to get notified if a particular friend, co-worker and so on comes close to him.

Another example would be the above referred Home zone billing where subscriber's tariff is changed according to his location (e.g. cheaper rates at home or office). Using these procedures and interface definitions it is possible to track these user's location in substantially real time.

If a subscriber wants to start a tracking for his surroundings he could use the same method as the supermarket did above. That is, the subscriber may place a request with the area that matches his own location at that present moment by making a connection to the Client and requesting to be informed when his pre-defined friend arrive to the same area. This kind of a service is preferably provided on the location middleware level. The access network controller level may not have enough information to compute this.

Thus the tracking feature may be triggered by the user himself (e.g. alarm me when I enter area), some other subscriber (e.g. alarm me when my wife is entering area), internal-client (e.g. alarm when a specific subscriber is entering/leaving an area) or external client (e.g. alarm wen a subscriber is entering an area).

In 2G GPRS the mobile user equipment may need to stay on the READY state in order to enable reporting of the cell changes to the network. If there is no data or other transmission ongoing the user equipment will be switched from ready state to standby state where only Routing Area changes are reported. The time how long mobile station will be in the ready state without data transmission is configurable by the operator. This specific timer is called "READY timer". If the Client receives the subscriber PMM (packet data mobility management) state information together with the location information the client is provided with indication that the Location Information may not be accurate enough. Furthermore, if needed, the Client may change the PMM State to READY e.g. by sending some data bits (e.g. service information) to the target user equipment.

In 3G GPRS the user equipment enters a PMM-IDLE mode when the packet - switched signalling connection for packet switched domain between the user equipment and the network has been released. In the PMM-IDLE mode the user equipment performs only periodic routing area updates. However, it may be assumed that the packet switched signalling connection time is much longer (e.g. half an hour) than that of the 2G READY timer. The value may be s modified by the operator.

It shall be appreciated that the invention may be implemented in association with any access technique. Thus, while in the above the exemplifying embodiments of the invention have described in the context of a WCDMA (Wideband Code Division Multiple Access) UMTS (Universal Mobile Telecommunications System) and/or a GPRS (General Packet radio Service), the embodiments of the present invention are also applicable to any other cellular communication system.

The invention may also be implemented without introducing any of the conventional LCS positioning mechanisms requiring location determinations to Radio Network or to the user equipment.

This method is believed to be substantially lightweight to implement. This may be case especially in the 2G systems because the 2G SGSN 11 is aware of the current cell of a user equipment all the time. However, similar principles may also be applied to 3G location reporting. In overall this procedure is not believed to provide any extra load to the radio access network (RAN). The extra load for the SGSN is also believed to be insignificant. Thus clear advantage is provided compared to the prior art where stand-alone LCS requests would cause a heavy burden to the whole system.

The SGSN knows subscriber location always when there is PDP context activated for a particular user equipment and the context is in use. This functionality allows effective location reporting capabilities without using heavy LCS procedures in the air interface. This functionality enables the location information to be send to the LCS client every time subscriber relocates from a Cell area or Services area to another when it has active PDP context ongoing.

The embodiments may thus provide a more efficient way to locate a substantially large number of subscribers than the conventional LCS positioning methods. This is because no conventional LCS positioning determinations has to be done. Instead, the already existing information about the current SA/Cell of specific subscribers can be used. Thus the invention enables efficient targeted push type messaging such as advertising, sending warnings or other messages to users in a certain area, home zone tariff applications, network monitoring, optimised user location and so on.

It is also noted herein that while the above describes exemplifying embodiments of the invention, there are several variations and modifications which may be made to the disclosed solution without departing from the scope of the present invention as defined in the appended claims.

## Claims

1. A communication system for provision of communication services for mobile user equipment (1) comprising:
a plurality of access entities for enabling the mobile user equipment to access the communication system;
a location information service entity (12) for provision of location information regarding the geographical location of at least one mobile user equipment (1):
at least one controller arranged to provide the location information service entity (12) with information regarding changes in the access entities involved in the provision of the service provided for the at least one mobile user equipment (1) by the communication system, the location information service entity (12) being arranged to provide location information based on said information regarding the changes.

2. A communication system as claimed in claim 1, wherein the at least one controller is arranged to push information about a defined change in the access entities involved in the provision of the service to the location information service entity (12) in response to detection of the defined change.

3. A communication system as claimed in claim 1 or 2, wherein said change in the service comprises movement of the mobile user equipment (1) from an access entity to another access entity.

4. A communication system as claimed in any preceding claim, wherein the access entity comprise a cell.

5. A communication system as claimed in any preceding claim, wherein the access entity comprises a service area.

6. A communication system as claimed in any preceding claim, wherein said at least one controller is arranged to provide the location information service entity (12) with a unique identifier of an access entity as an indication of a change in the location of the mobile user equipment (1).

7. A communication system as claimed in any preceding claims, wherein the location information service entity (12) defines geographical location coordinates of the mobile user equipment (1) based on said information from the at least one controller.

8. A communication system as claimed in any preceding claim, wherein the location information service entity (12) comprises a spatial database for storing information for use in association of access entity identifiers with geographical location areas.

9. A communication system as claimed in any preceding claim, wherein the location information service entity (12) comprises a gateway mobile location centre.

10. A communication system as claimed in any preceding claim, wherein information about the changes is provided by a mobile switching centre (MSC).

11. A communication system as claimed in any preceding claim, wherein information about the changes is provided by a serving GPRS support node (SGSN).

12. A communication system as claimed in any preceding claim, wherein information about the changes is provided by an access entity controller.

13. A communication system as claimed in claim 12, wherein the access entity controller comprises a radio network controller (RNC) or a base station controller (BSC).

14. A communication system as claimed in any preceding claim, wherein the location information service entity (12) is arranged to respond a location information request by a client (8) based on said information from said at least one controller.

15. A communication system as claimed in claim 14, wherein the client (8) is either an external client.

16. A communication system as claimed in claim 14, wherein the client (8) is either an internal client.

17. A communication system as claimed in claim 16, wherein the client (8) comprises a service control point of an intelligent network.

18. A communication system as claimed in any of claims 14 to 17, wherein the request from the client request for location information regarding a substantially large group of users of mobile user equipment (1).

19. A communication system as claimed in any preceding claim, wherein the location information service entity (12) is arranged to provide information regarding the operational state of the user equipment (1) and/or data volumes communicated to and/or from the user equipment (1).

20. A communication system as claimed in any preceding claim, wherein the location information provision procedure can be initiated by at least one of the following: a service provider; a user of a mobile user equipment (1); an entity of the communication system.

21. A communication system as claimed in any preceding claim, wherein a plurality of access entities is grouped into a larger location area group, the arrangement being such that location information is provided only if the user equipment (1) moves into or out from the location area group.

22. A communication system as claimed in any preceding claim, comprising location service means for accomplishing location information measurement and/or calculations.

23. A location information service entity for a communication system, comprising:
an input for receiving from the elements of the communication system information regarding an access entity of the communication system that is serving a mobile user equipment;
a processor for processing the information;
a database for storing spatial information wherein the access entities are associated with geographical locations;
an output for provision of location information to a client based on said information regarding the access entity serving the mobile user equipment and said spatial information stored in the database.

24. A method of providing location information for a client regarding mobile user equipment served by a communication system, said communication system providing communication services for the mobile user equipment (1) by means of a plurality of access entities, the method comprising:
activation a monitoring function in a controller of the communication system for detection of an event in association with the access entities involved in the provision of communication services for at least one mobile user equipment (1);
in response to detection of the event, reporting the event to a location information service entity (12) arranged for provision of location information regarding the geographical location of said at least one mobile user equipment (1); and
based on said information regarding the event, generating a message for reporting to the client the location of said at least one user equipment (1).

25. A method as claimed in claim 24, wherein said event comprises movement of the mobile user equipment (1) from an access entity to another access entity.

26. A method as claimed in claim 24 or 25, wherein the access entity comprise a cell or a service area.

27. A method as claimed in any of claims 24 to 26, wherein the controller provides the location information service entity (12) with a unique identifier of an access entity as an indication that the mobile user equipment (1) has moved from an access entity to another access entity.

28. A method as claimed in any of claims 24 to 27, wherein the location information service entity (12) defines geographical location coordinates of the mobile user equipment (1) based on said information from the controller.

29. A method as claimed in any of claims, 24 to 28, where in the client request for location information regarding a substantial large group of users of mobile user equipment (1).

30. A method as claimed in any of claims 24 to 29, wherein the responsibility to provide the location information service entity (12) with information regarding the event is relocated to another controller.

## Patentansprüche

1. Kommunikationssystem zur Bereitstellung von Kommunikationsdiensten für eine mobile Benutzerausstattung (1), welches umfasst:
eine Vielzahl von Zugriffsentitäten, um der mobilen Benutzerausstattung zu ermöglichen, auf das Kommunikationssystem zuzugreifen;
eine Positionsinformationsdienstentität (12) zur Bereitstellung von Positionsinformation bezüglich der geographischen Position wenigstens einer mobilen Benutzerausstattung (1);
wenigstens einen Controller, der ausgelegt ist, um die Positionsinformationsdienstentität (12) mit Information bezüglich Änderungen in den Zugriffsentitäten zu versorgen, die mit der Bereitstellung des Dienstes befasst sind, der für die wenigstens eine mobile Benutzerausstattung (1) vom Kommunikationssystem bereitgestellt wird, wobei die Positionsinformationsdienstentität (12) ausgelegt ist, um Positionsinformation auf der Grundlage der Information bezüglich der Änderungen bereitzustellen.

2. Kommunikationssystem gemäß Anspruch 1, wobei der wenigstens eine Controller ausgelegt ist, um Information über eine festgelegte Änderung in den Zugriffsentitäten, die mit der Bereitstellung des Dienstes an die Positionsinformationsdienstentität (12) befasst sind, in Reaktion auf eine Detektierung der festgelegten Änderung zu pushen.

3. Kommunikationssystem gemäß Anspruch 1 oder 2, wobei die Dienständerung eine Bewegung der mobilen Benutzerausstattung (1) von einer Zugriffsentität zu einer anderen Zugriffentität umfasst.

4. Kommunikationssystem gemäß einem der vorhergehenden Ansprüche, wobei die Zugriffsentität eine Zelle umfasst.

5. Kommunikationssystem gemäß einem der vorhergehenden Ansprüche, wobei die Zugriffsentität ein Dienstgebiet umfasst.

6. Kommunikationssystem gemäß einem der vorhergehenden Ansprüche, wobei der wenigstens eine Controller ausgelegt ist, um die Positionsinformationsdienstentität (12) mit einem eindeutigen Identifikator einer Zugriffsentität als eine Angabe einer Positionsänderung der mobilen Benutzerausstattung (1) zu versorgen.

7. Kommunikationssystem gemäß einem der vorhergehenden Ansprüche, wobei die Positionsinformationsdienstentität (12) geographische Positionskoordinaten der mobilen Benutzerausstattung (1) auf der Grundlage der Information von dem wenigstens einen Controller festlegt.

8. Kommunikationssystem gemäß einem der vorhergehenden Ansprüche, wobei die Positionsinformationsdienstentität (12) eine räumliche Datenbasis zum Speichern von Information im Zusammenhang mit Zugriffsentitätsidentifikatoren mit geographischen Positionsgebieten umfasst.

9. Kommunikationssystem gemäß einem der vorhergehenden Ansprüche, wobei die Positionsinformationsdienstentität (12) ein Gateway Mobile Location Centre umfasst.

10. Kommunikationssystem gemäß einem der vorhergehenden Ansprüche, wobei Information über die Änderungen von einem mobilen Schaltzentrum (MSC) bereitgestellt wird.

11. Kommunikationssystem gemäß einem der vorhergehenden Ansprüche, wobei Information über die Änderungen von einem Dienst bereitstellenden GPRS Stützknoten (SGSN) bereitgestellt wird.

12. Kommunikationssystem gemäß einem der vorhergehenden Ansprüche, wobei Information über die Änderungen von einem Zugriffsentitätscontroller bereitgestellt wird.

13. Kommunikationssystem gemäß Anspruch 12, wobei der Zugriffsentitätscontroller einen Funknetzcontroller (RNC) oder einen Basisstationscontroller (BSC) umfasst.

14. Kommunikationssystem gemäß einem der vorhergehenden Ansprüche, wobei die Positionsinformationsdienstentität (12) ausgelegt ist, um eine Positionsinformationsanfrage durch einen Client (8) auf der Grundlage der Information von dem wenigstens einen Controller zu beantworten.

15. Kommunikationssystem gemäß Anspruch 14, wobei der Client (8) entweder ein externer Client ist.

16. Kommunikationssystem gemäß Anspruch 14, wobei der Client (8) entweder ein interner Client ist.

17. Kommunikationssystem gemäß Anspruch 16, wobei der Client (8) einen Dienststeuerpunkt eines intelligenten Netzes umfasst.

18. Kommunikationssystem gemäß einem der Ansprüche 14 bis 17, wobei die Anfrage vom Client nach Positionsinformation bezüglich einer im Wesentlichen großen Gruppe von Benutzern einer mobilen Benutzerausstattung (1) fragt.

19. Kommunikationssystem gemäß einem der vorhergehenden Ansprüche, wobei die Positionsinformationsdienstentität (19) ausgelegt ist, um Information bezüglich des Betriebszustands der Benutzerausstattung (1) und/oder Datenvolumen bereitzustellen, die an und/oder von der Benutzerausstattung (1) kommuniziert werden.

20. Kommunikationssystem gemäß einem der vorhergehenden Ansprüche, wobei das Verfahren zur Bereitstellung der Positionsinformation von wenigstens einem der folgenden initiiert werden kann: einem Dienstbereitsteller; einem Benutzer einer mobilen Benutzerausstattung (1); einer Entität des Kommunikationssystem.

21. Kommunikationssystem gemäß einem der vorhergehenden Ansprüche, wobei eine Vielzahl von Zugriffsentitäten in eine größere Positionsgebietsgruppe gruppiert ist, wobei die Anordnung derart ist, dass die Positionsinformation nur bereitgestellt wird, falls die Benutzerausstattung (1) sich in die oder aus der Positionsgebietgruppe bewegt.

22. Kommunikationssystem gemäß einem der vorhergehenden Ansprüche, das Positionsdienstmittel zum Durchführen einer Positionsinformationsmessung und/oder
- berechnungen umfasst.

23. Positionsinformationsdienstentität für ein Kommunikationssystem, welche umfasst:
einen Eingang zum Empfangen von den Elementen des Kommunikationssystems von Information bezüglich einer Zugriffsentität des Kommunikationssystems, das einer mobilen Benutzerausstattung Dienste bereitstellt;
einen Prozessor zum Verarbeiten der Information;
eine Datenbank zum Speichern von räumlicher Information, wobei die Zugriffsentitäten geographischen Positionen zugeordnet sind;
einen Ausgang zur Bereitstellung von Positionsinformation an einen Client auf der Grundlage der Information bezüglich der Zugriffsentität, die der mobilen Benutzerausstattung Dienste bereitstellt, und der räumlichen, in der Datenbank gespeicherten Information.

24. Verfahren zum Bereitstellen von Positionsinformation für einen Client bezüglich einer mobilen Benutzerausstattung, die von einem Kommunikationssystem mit Diensten versorgt wird, wobei das Kommunikationssystem Kommunikationsdienste für die mobile Benutzerausstattung (1) mittels einer Vielzahl von Zugriffsentitäten bereitstellt, wobei das Verfahren umfasst:
Aktivierung einer Überwachungsfunktion in einem Controller des Kommunikationssystems zur Detektierung eines Ereignisses in Zusammenhang mit den Zugriffsentitäten, die mit der Bereitstellung von Kommunikationsdiensten für wenigstens eine mobile Benutzerausstattung (1) befasst sind;
in Reaktion auf eine Detektierung des Ereignisses, Berichten des Ereignisses an eine Positionsinformationsdienstentität (12), die zur Bereitstellung von Positionsinformation bezüglich der geographischen Position der wenigstens einen mobilen Benutzerausstattung (1) ausgelegt ist; und
auf der Grundlage der Information bezüglich des Ereignisses, Erzeugen einer Nachricht zum Berichten der Position der wenigstens einen Benutzerausstattung (1) an den Client.

25. Verfahren gemäß Anspruch 24, wobei das Ereignis eine Bewegung der mobilen Benutzerausstattung (1) von einer Zugriffsentität zu einer anderen Zugriffsentität umfasst.

26. Verfahren gemäß Anspruch 24 oder 25, wobei die Zugriffsentität ein Zellen-oder Dienstgebiet umfasst.

27. Verfahren gemäß einem der Ansprüche 24 bis 26, wobei der Controller die Positionsinformationsdienstentität (12) mit einem eindeutigen Identifikator einer Zugriffsentität als eine Angabe versorgt, dass sich die mobile Benutzerausstattung
(1) von einer Zugriffsentität zu einer anderen Zugriffsentität bewegt hat.

28. Verfahren gemäß einem der Ansprüche 24 bis 27, wobei die Positionsinformationsdienstentität (12) geographische Positionskoordinaten der mobilen Benutzerausstattung (1) auf der Grundlage der Information von dem Controller festlegt.

29. Verfahren gemäß einem der Ansprüche 24 bis 28, wobei der Client nach einer Positionsinformation bezüglich einer im Wesentlichen großen Gruppe von Benutzern der mobilen Benutzerausstattung (1) fragt.

30. Verfahren gemäß einem der Ansprüche 24 bis 29, wobei die Verantwortlichkeit, die Positionsinformationsdienstentität (12) mit Information bezüglich des Ereignisses zu versorgen, auf einen anderen Controller verschoben wird.

## Revendications

1. Système de communication pour fourniture de services de communication pour équipement utilisateur mobile (1) comprenant :
une pluralité d'entités d'accès pour permettre à l'équipement utilisateur mobile d'accéder au système de communication ;
une entité de service d'informations de localisation (12) pour fournir des informations de localisation concernant la localisation géographique d'au moins un équipement utilisateur mobile (1) ;
au moins un contrôleur conçu pour fournir à l'entité de service d'informations de localisation (12) des informations concernant des changements dans les entités d'accès impliquées dans la fourniture du service fournies pour l'au moins un équipement utilisateur mobile (1) par le système de communication, l'entité de service d'informations de localisation (12) étant conçue pour fournir des informations de localisation sur la base desdites informations concernant les changements.

2. Système de communication selon la revendication 1, dans lequel l'au moins un contrôleur est conçu pour pousser des informations sur un changement défini dans les entités d'accès impliquées dans la fourniture du service vers l'entité de service d'informations de localisation (12) en réponse à la détection du changement défini.

3. Système de communication selon la revendication 1 ou 2, dans lequel ledit changement dans le service comprend un mouvement de l'équipement utilisateur mobile (1) d'une entité d'accès vers une autre entité d'accès.

4. Système de communication selon l'une quelconque des revendications précédentes, dans lequel l'entité d'accès comprend une cellule.

5. Système de communication selon l'une quelconque des revendications précédentes, dans lequel l'entité d'accès comprend une zone de service.

6. Système de communication selon l'une quelconque des revendications précédentes, dans lequel ledit au moins un contrôleur est conçu pour fournir à l'entité de service d'informations de localisation (12) un identificateur unique d'une entité d'accès comme une indication d'un changement dans la localisation de l'équipement utilisateur mobile (1).

7. Système de communication selon l'une quelconque des revendications précédentes, dans lequel l'entité de service d'informations de localisation (12) définit des coordonnées de localisation géographique de l'équipement utilisateur mobile (1) sur la base desdites informations provenant de l'au moins un contrôleur.

8. Système de communication selon l'une quelconque des revendications précédentes, dans lequel l'entité de service d'informations de localisation (12) comprend une base de données spatiale pour stocker des informations à utiliser en association aux identificateurs d'entité d'accès avec des zones de localisation géographiques.

9. Système de communication selon l'une quelconque des revendications précédentes, dans lequel l'entité de service d'informations de localisation (12) comprend un centre de localisation mobile passerelle.

10. Système de communication selon l'une quelconque des revendications précédentes, dans lequel les informations concernant les changements sont fournies par un centre de commutation mobile (MSC).

11. Système de communication selon l'une quelconque des revendications précédentes, dans lequel les informations concernant les changements sont fournies par un noeud de support GPRS de service (SGSN).

12. Système de communication selon l'une quelconque des revendications précédentes, dans lequel les informations concernant les changements sont fournies par un contrôleur d'entité d'accès.

13. Système de communication selon la revendication 12, dans lequel le contrôleur d'entité d'accès comprend un contrôleur de réseau radio (RNC) ou un contrôleur de station de base (BSC).

14. Système de communication selon l'une quelconque des revendications précédentes, dans lequel l'entité de service d'informations de localisation (12) est conçue pour répondre à une demande d'informations de localisation par un client (8) sur la base desdites informations provenant dudit au moins un contrôleur.

15. Système de communication selon la revendication 14, dans lequel le client (8) est un quelconque client externe.

16. Système de communication selon la revendication 14, dans lequel le client (8) est un quelconque client interne.

17. Système de communication selon la revendication 16, dans lequel le client (8) comprend un point de contrôle de service d'un réseau intelligent.

18. Système de communication selon l'une quelconque des revendications 14 à 17, dans lequel la demande du client concerne des informations de localisation concernant un groupe sensiblement important d'utilisateurs de l'équipement utilisateur mobile (1).

19. Système de communication selon l'une quelconque des revendications précédentes, dans lequel l'entité de service d'informations de localisation (12) est conçue pour fournir des informations concernant l'état opérationnel de l'équipement utilisateur (1) et/ou des volumes de données communiquées à l'équipement utilisateur (1) ou par celui-ci.

20. Système de communication selon l'une quelconque des revendications précédentes, dans lequel la procédure de fourniture d'informations de localisation peut être lancée par au moins un des éléments suivants : un fournisseur de service, un utilisateur d'un équipement utilisateur mobile (1) ; une entité du système de communication.

21. Système de communication selon l'une quelconque des revendications précédentes, dans lequel une pluralité d'entités d'accès sont groupées dans un groupe de zone de localisation plus grand, l'agencement étant tel que les informations de localisation sont fournies uniquement si l'équipement utilisateur (1) se déplace dans le groupe de zone de localisation ou hors de celui-ci.

22. Système de communication selon l'une quelconque des revendications précédentes, comprenant des moyens de service de localisation pour accomplir une mesure et/ou des calculs d'informations de localisation.

23. Entité de service d'informations de localisation pour système de communication, comprenant :
une entrée pour recevoir des éléments du système de communication des informations concernant une entité d'accès du système de communication qui dessert un équipement utilisateur mobile ;
un processeur pour traiter les informations ;
une base de données pour stocker des informations spatiales dans laquelle les entités d'accès sont associées à des localisations géographiques ;
une sortie pour fourniture d'informations de localisation à un client sur la base desdites informations concernant l'entité d'accès desservant l'équipement utilisateur mobile et desdites informations spatiales stockées dans la base de données.

24. Procédé de fourniture d'informations de localisation pour un client concernant un équipement utilisateur mobile desservi par un système de communication, ledit système de communication fournissant des services de communication pour l'équipement utilisateur mobile (1) au moyen d'une pluralité d'entités d'accès, le procédé consistant à :
activer une fonction de surveillance dans un contrôleur du système de communication pour détecter un événement en association avec les entités d'accès impliquées dans la fourniture de services de communication pour au moins un équipement utilisateur mobile (1) ;
en réponse à la détection de l'événement, reporter l'événement à une entité de service d'informations de localisation (12) conçue pour la fourniture d'informations de localisation concernant la localisation géographique dudit au moins un équipement utilisateur mobile (1) ; et
sur la base desdites informations concernant l'événement, générer un message pour rapporter au client la localisation dudit au moins un équipement utilisateur (1).

25. Procédé selon la revendication 24, dans lequel ledit événement comprend le mouvement de l'équipement utilisateur mobile (1) d'une entité d'accès vers une autre entité d'accès.

26. Procédé selon la revendication 24 ou 25, dans lequel l'entité d'accès comprend une cellule ou une zone de service.

27. Procédé selon l'une quelconque des revendications 24 à 26, dans lequel le contrôleur fournit à l'entité de service d'informations de localisation (12) un identificateur unique d'une entité d'accès comme une indication que l'équipement utilisateur mobile (1) s'est déplacé d'une entité d'accès vers une autre entité d'accès.

28. Procédé selon l'une quelconque des revendications 24 à 27, dans lequel l'entité de service d'informations de localisation (12) définit les coordonnées de localisation géographique de l'équipement utilisateur mobile
(1) sur la base desdites informations provenant du contrôleur.

29. Procédé selon l'une quelconque des revendications 24 à 28, dans lequel la demande du client en informations de localisation concerne un groupe sensiblement important d'utilisateurs d'équipement utilisateur mobile (1).

30. Procédé selon l'une quelconque des revendications 24 à 29, dans lequel la responsabilité de la fourniture à l'entité de service d'informations de localisation (12) des informations concernant l'événement est transférée à un autre contrôleur.
